# EUROPEAN PATENT SPECIFICATION

(11) **EP 0 477 863 B1**
(45) Date of publication and mention of the grant of the patent: **12.11.1997**
(21) Application number: 91116242.8
(22) Date of filing: 24.09.1991
(51) Int. Cl.: E05C 19/02, G11B 17/022, G11B 23/26

(54) **Latch device**
Sperrvorrichtung
Dispositif de verrouillage

(30) Priority: 27.09.1990 JP 258306/90; 13.11.1990 JP 306878/90; 13.11.1990 JP 306879/90; 30.11.1990 JP 340669/90
(43) Date of publication of application: 01.04.1992
(60) Divisional application: 95106804.8
(73) Proprietor: NIFCO INC., Yokohama-shi Kanagawa-ken (JP)
(72) Inventor: Kurosaki, Matsuo, Toyota-shi, Aichi-ken (JP)
(74) Representative: Goddar, Heinz J., Dr.

(56) References cited:
- AT-B- 354 766
- DE-A- 3 445 460
- DE-A- 3 535 765

## Description

### BACKGROUND OF THE INVENTION

### Field of the Invention:

The present invention relates to a latch device according to the preamble of claim 1. It may be used in a lock mechanism in which, by pressing an openable cover of an audio apparatus, an audio-apparatus accommodating case or the like, or an openable member of such as a door of a box or the like, the openable cover or member is engaged with or disengaged from a main body, whereby a latch body is retained in a pushed-in state in a housing or a withdrawn state for receiving a striker of the door.

### Description of the Related Art:

In a typical audio apparatus or the like, a latch device L is provided on an openable cover so as to retain the openable cover, as shown in Fig. 3. Such device is for example disclosed in US-A 4 616 861.

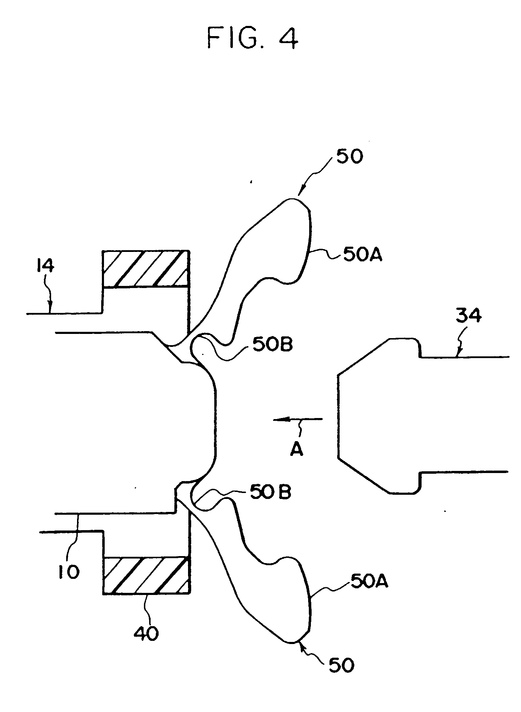

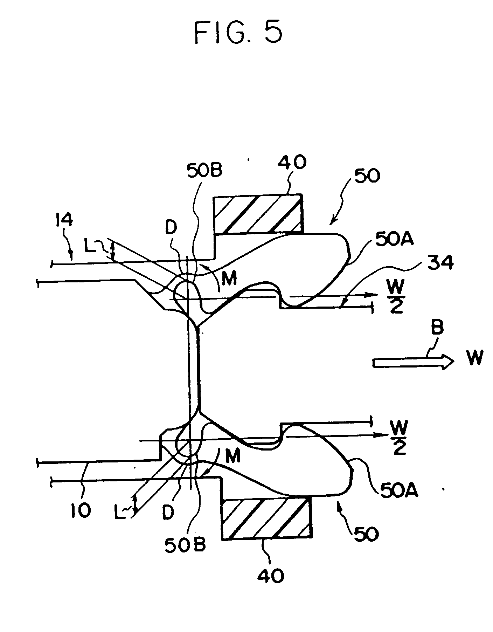

As shown in the drawing, the latch device L is arranged such that each time a latch body 10 being in the withdrawn state is pressed by a striker 34 in the direction of arrow A (as in Fig 4), a tracing member provided in a housing 14 moves halfway in a heart-shaped circulatory cam groove formed in the latch body 10, thereby allowing the latch body 10 to be retained in the housing 14 alternatively in a state in which the latch body 10 is pushed in and in a state in which it is withdrawn from the housing to receive the striker between a pair of arms 50 formed on the latch body 10. Concurrently, as shown in Fig. 5, while the pair of arms 50 are respectively being pressed by a pair of rectangular frames 40 of the housing 14, the striker 34 fixed to the openable cover is clamped or released, thereby setting the openable cover in a closed state or in an openable state.

As shown in Figs. 4 and 5, each of the arms 50, which are generally provided on the latch body 10, comprises a holder portion 50A for clamping the striker 34 and a hinge portion 50B serving as a center of rotation of the holder portion 50A. The arms 50 are formed of a flexible material such as nylon so as to facilitate the bending of the hinge portions 50B and reduce their frictional resistance with respect to the rectangular frames 40.

However, there has been a drawback in that if a large tensile load (acting in the direction of arrow B in Fig. 5) is continuously applied to the striker 34 while the respective holder portions 50A of the arms 50 are holding the striker 34, since the hinge portions 50A are flexible, the hinge portions 50B become elongated or offset in the direction in which the holder portions 50A are spaced apart from each other, thus causing the striker 34 to come off the holder portions 50A.

To give a more detailed description, when a tensile force W shown in Fig. 5 acts on each holder portion 50A via the striker 34, if the length of the arm is assumed to be L, a bending moment M (M = WL/2) acts on each hinge portion 50B. Accordingly, each hinge portion 50B rotates in the direction in which the holder portions 50A are spaced apart from each other. In addition, since a tensile force σ (σ = M/Z, Z: coefficient of a cross section) due to the bending moment M acts on each hinge portion 50B, the hinge portions 50B become elongated in the direction of arrow B. As a result, the holder portions 50A become offset in the direction of arrow B while becoming spaced apart from each other. Hence, there has been the drawback that the striker 34 is liable to come off the holder portions 50A.

In addition, since an outer side of the hinge portion 50B is formed as a curved portion D, there has been another drawback in that if the tensile force W acts, the curved portion D is pulled, so that the hinge portion 50B becomes elongated.

### SUMMARY OF THE INVENTION

In view of the above circumstances, an object of the present invention is to provide a latch device featuring an arm structure wherein the bending performance of a pair of hinge portions is excellent and the hinge portions do not undergo deformation even with respect to a large tensile force.

In accordance with the present invention, a latch device is provided according to the definition of claim 1.

In the above-described arm structure of the latch device in accordance with the invention, when the openable member is closed, the latch body is pressed by the striker and is retained in pushed-in state in the housing secured to the main body of an apparatus. At this juncture, the pair of arms disposed on the latch body are pressed by the frame of the housing, and rotate in a mutually approaching direction, thereby clamping the striker.

With the striker held by the arms, if a tensile force (W) acts on the striker in a direction in which the striker is released from the arms, the force of the striker acting in the direction in which the striker is released acts on a retaining surface of each of the arms for retaining the striker (W/2). However, since the center of rotation of each of the arms is located on substantially the same line as the line of action of a force acting on the retaining surface of the arm, bending moment does not act on the center of rotation. Accordingly, since only the tensile force acts on the center of rotation, there occurs no rotating force acting in the direction in which the arms are spaced apart from each other, nor a tensile force due to the bending moment.

Furthermore, since the outer side of a central portion of rotation may be arranged to be parallel with the line of action of the tensile force, an elongation of a hinge portion is difficult to occur.

As described above, with the arm structure of the latch device in accordance with the invention, even if a large tensile force acts on the striker when the striker is clamped, no bending moment occurs in the hinge portions. Accordingly, the hinge portions are prevented from rotating in the direction in which the holder portions are spaced apart from each other, and the hinge portions are prevented from becoming offset in the pulling direction.

Furthermore, since the outer side of each of the hinge portions may be formed to be parallel with the line of action of the tensile force, the hinge portions are difficult to become elongated.

For this reason, since the structure provided is such that even if the arms are formed of a flexible material, the offsetting of the holder portions are prevented, the striker is prevented from coming off the holder portions.

### BRIEF DESCRIPTION OF THE DRAWINGS

Fig. 1 is a plan view illustrating a state before a pair of arms in accordance with an embodiment of the invention clamps a striker;
Fig. 2 is a plan view illustrating a state after the pair of arms in accordance with the embodiment of the invention has clamped the striker;
Fig. 3 is an exploded perspective view of a latch device having the arms in accordance with the embodiment of the invention;
Fig. 4 is a plan view illustrating a state before conventional arms clamp the striker; and
Fig. 5 is a plan view illustrating a state after the conventional arms have clamped the striker.

### DETAILED DESCRIPTION OF THE PREFERRED EMBODIMENTS

### (Overall Configuration of Latch Mechanism)

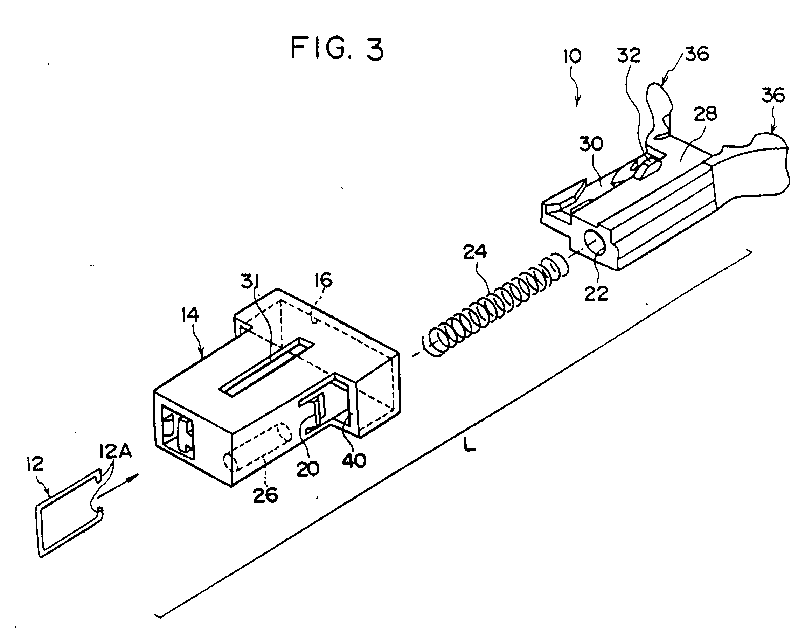

As shown in Fig. 3, a latch device L comprises a latch body 10 and a housing 14 for accommodating a tracing member 12 therein.

The housing 14 has a box-shaped configuration of a predetermined thickness, and the latch body 10 is inserted into an opening 16 formed at a longitudinal end of the housing 14. A rectangular frame 40 for fixing the housing 14 to an audio apparatus or the like is formed in such a manner as to define the opening 16. A pair of projections 20 are formed on opposite side surfaces of the housing 14, respectively, in correspondence with the laterally projecting portions of the rectangular frame 40. This arrangement is provided to allow an unillustrated fixing plate to be clamped by the laterally projecting portion of the rectangular frame 40 and the projection 20 on each side of the housing 14, so as to fix the housing 14 to the fixing plate.

The latch body 10 which is inserted into the housing 14 is substantially rectangular parallelepipedal in configuration, and a cylindrical hole 22 is formed along the longitudinal direction of the latch body 10, extending from an insertion end thereof. A compression coil spring 24 is accommodated in the cylindrical hole 22. A portion of the compression coil spring 24 projects from the cylindrical hole 22 and is fitted in a spring-bearing hole 26. As a result, the latch body 10 is constantly urged by the compression coil spring 24 in the direction in which the latch body 10 is pulled out of the housing 14.

A recessed portion 28 is formed on each of the top and bottom surfaces of the latch body 10. A circulatory cam groove 30 is formed in each of the recessed portions 28. Each tip portion 12A of the tracing member 12 is inserted into the respective circulatory cam groove 30 and is adapted to move in the circulatory cam groove 30 in a circulating manner while being brought into contact with the wall surface of the circulatory cam groove 30, so as to retain the latch body 10 in its pushed-in state.

A projection 32 is formed on the top surface of the latch body 10, and is fitted in an elongated guide hole 31 formed in the housing 14. As a result, as the projection 32 moves in the elongated guide hole 31, the latch body 10 is reciprocatively moved relative to the housing 14. Also, as the projection 32 is brought into contact with one end of the elongated guide hole 31, further movement of the latch body 10 in the direction in which it is pulled out is prevented against the urging force of the compression coil spring 24.

The first aspect of the present invention relates to the structure of the arms of the latch device. An embodiment thereof'will be described hereinunder.

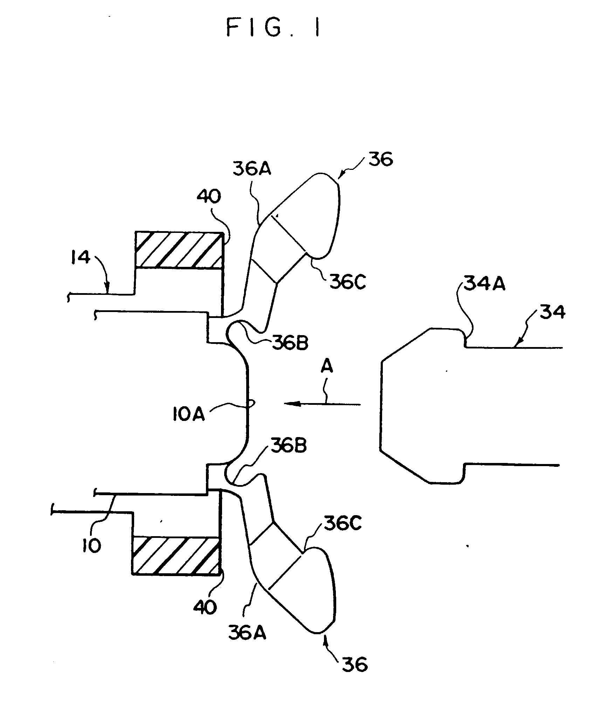

As shown in Fig. 1, a pair of arms 36 for clamping a striker 34 are provided on the latch body 10. Each arm 36 comprises a holder portion 36A and a hinge portion 36B. The holder portions 36A in their free state, i.e., before the latch body 10 is pushed into the housing 14 in the direction of arrow A, are formed to be spaced apart from each other. Formed at the distal end of the holder portion 36A is a hook portion 36C projecting perpendicularly to the axis of the holder portion 36A. These hook portions 36C are adapted to abut against an enlarged-diameter portion 34A of the striker 34 so as to prevent the striker 34 from being pulled out.

The hinge portions 36B with a small thickness are formed at the respective root portions of the arms 36. These hinge portions 36B serve as fulcrums when the holder portions 36B rotate in the mutually approaching direction.

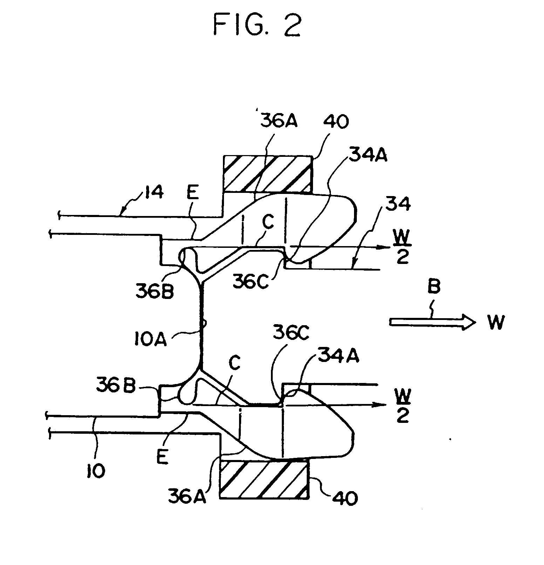

As shown in Fig. 2, in the state in which the striker 34 is held by the holder portions 36A, each of the hinge portions 36B is formed in such a manner as to be located on an extension of a line of action C of a tensile force W in the direction of arrow B acting on the hook portion 36C via the striker 34.

In addition, an outer side E of each of the hinge portions 36B is formed in such a manner as to be parallel with the line of action C of the tensile force W.

The operation of this embodiment will be described hereinunder.

As shown in Fig. 1, when the latch body 10 is not pushed in by the striker 34, the holder portions 36A of the arms 36 are spaced apart from each other.

Then, as shown in Fig. 2, when a central portion 10A of the latch body 10 is pushed in the direction of arrow A by the striker 34, the latch body 10 is accommodated in the housing 14. Concurrently, as the outer sides of the holder portions 36A are pressed by the rectangular frame 40, and the hinge portions 36B, the holder portions 36A rotate in the mutually approaching direction with the hinge portions 36B as the fulcrums. For this reason, the striker 34 is clamped by the holder portions 36A, thereby retaining the openable cover.

Next, if the large tensile force W (acting in the direction of arrow B) acts on the striker 34 with the striker 34 thus held, a tensile force W/2 acts on the mutually abutting portions of the enlarged-diameter portion 34A and the hook portion 36C. Although this tensile force W/2 acts on each hinge portion 36C, since the hinge portion 36B is now located on the line of action C of the tensile force W/2, no bending moment occurs in the hinge portions 36B.

Accordingly, the hinge portions 36B do not rotate in the direction in which the holder portions 36A are spaced apart from each other, and the tensile force resulting from the bending moment does not occur in the hinge portions 36B. The hinge portions 36B are prevented from becoming offset in the direction of arrow B insofar as the tensile force W/2 does not exceed the allowable tensile stress of each arm 36.

Even if the hinge portion 36B is slightly offset from the extension of the line of action C, the outer side E of the hinge portion 36B is formed in such a manner as to be parallel with the line of action C of the tensile force. For this reason, since there is no leeway in which the curved portion D is elongated in the manner of a hinge portion 50B shown in Fig. 5, the hinge 36B is prevented from being elongated. It should be noted that the configuration of the arm 36 is not confined to the configuration shown in this embodiment, and it suffices if the structure provided is such that, with the striker 34 held by the holder portions 36B, each hinge portion 36B is located on the line of action of the tensile force acting on the holder portion 36A.

## Claims

1. A latch device, comprising:
a housing (14) fitted on a main body ;
a striker (34) fitted on a member which is openable relative the main body; and
a latch body (10) having a pair of arms (36) which is slidably retained by said housing such that in a first, free state the arms extend spaced apart outside the housing to receive the striker between the arms, in which state the latch body is pulled out by an urging force, and in a second state in which said latch body (10) is pushed into said housing by said striker the arms are rotated in a mutually approaching direction thereby clamping said striker (34), wherein by a retaining surface which abuts the striker of each of said arms a force is acting on said striker for retaining it relative to a tensile force (W) acting in a direction (B) in which said striker (34) is released,
characterized in that
the center of rotation (36B) of each of said arms (36) is formed on substantially the same line as a line (C) of action of the tensile force (W/2) acting on each of the mutually abutting surfaces of the arms and the striker which line is parallel to the direction (B) in which said striker is released, such that no bending moment occurs in the center of rotation of the arms.

2. A latch device according to claim 1, wherein an outer side (E) of the center of rotation (36B) of said arms is substantially rectilinear.

3. A latch device according to claim 2, wherein said outer side (E) is parallel with said line (C).

## Patentansprüche

1. Verriegelungsvorrichtung mit:
einem Gehäuse (14), das auf einen Grundkörper aufgesetzt ist;
einem Stößel (34), der in einem Teil eingebaut ist, das relativ zu dem Grundkörper zu öffnen ist; und
einem Verriegelungskörper (10) mit einem Paar Armen (36), der durch das genannte Gehäuse verschieblich gehalten ist, so daß sich in einem ersten, freien Zustand die Arme außerhalb des Gehäuses mit einem gegenseitigen Abstand erstrecken, um den Stößel zwischen den Armen aufzunehmen, wobei an dem Verriegelungskörper in diesem Zustand durch eine Druckkraft nach außen gezogen wird, und in einem zweiten Zustand, in dem der Verriegelungskörper (10) durch den Stößel in das Gehäuse eingedrückt ist, die Arme in einer sich einander annähernden Richtung gedreht sind, wodurch der Stößel (34) festgespannt wird, wobei durch eine Haltefläche, die gegen den Stößel anstößt, eines jeden der Arme eine Kraft auf den Stößel wirkt, um diesen relativ zu einer Zugkraft (W) festzuhalten, die in einer Richtung (B) wirkt, in der der Stößel (34) gelöst wird,
dadurch gekennzeichnet, daß
der Drehungsmittelpunkt (36B) eines jeden Arms (36) im wesentlichen auf der gleichen Linie wie eine Wirkungslinie (C) der Zugkraft (W/2) ausgebildet ist, die auf jede der aneinanderliegenden Flächen der Arme und des Stößels wirkt, wobei die Linie parallel zu der Richtung (B) ist, in der der Stößel gelöst wird, so daß kein Biegemoment im Drehungsmittelpunkt der Arme auftritt.

2. Verriegelungsvorrichtung nach Anspruch 1, dadurch gekennzeichnet, daß eine Außenseite (E) des Drehungsmittelpunkts (36B) der Arme im wesentlichen geradlinig ist.

3. Verriegelungsvorrichtung nach Anspruch 2, dadurch gekennzeichnet, daß die Außenseite (E) parallel zu der Linie (C) ist.

## Revendications

1. Dispositif à verrou, comprenant :
un boîtier (14) monté sur un corps principal, un poussoir (34) monté sur un organe qui peut être ouvert par rapport au corps principal, et
un corps de verrou (10) ayant une paire de bras (36) qui est retenu de manière coulissante par le boîtier de manière que, dans un premier état libre, les bras soient espacés à l'extérieur du boîtier et permettent le logement du poussoir entre les bras, le corps de verrou étant tiré à l'extérieur dans cet état par une force de rappel, et dans un second état dans lequel le corps de verrou (10) est poussé dans le boîtier par le poussoir, les bras soient tournés dans un sens qui les rapproche de manière qu'ils serrent le poussoir (34), dans lequel, à l'aide d'une surface de retenue qui est en butée contre le poussoir sur chacun des bras, une force agit sur le poussoir pour sa retenue sous l'action d'une force de traction (W) agissant dans une direction (B) dans laquelle le poussoir (34) est libéré,
caractérisé en ce que
le centre de rotation (36B) de chacun des bras (36) est formé pratiquement sur la même ligne qu'une ligne d'action (C) de la force de traction (W/2) qui agit sur chacune des surfaces mutuellement en butée des bras et du poussoir, cette ligne étant parallèle à la direction (B) dans laquelle le poussoir est libéré, si bien qu'aucun moment de flexion ne se produit au centre de rotation des bras.

2. Dispositif à verrou selon la revendication 1, dans lequel une face externe (E) du centre de rotation (36B) des bras est pratiquement rectiligne.

3. Dispositif à verrou selon la revendication 2, dans lequel la face externe (E) est parallèle à la ligne d'action (C).
